# EUROPÄISCHE PATENTSCHRIFT

(11) **EP 1 132 417 B1**
(45) Veröffentlichungstag und Bekanntmachung des Hinweises auf die Patenterteilung: **15.09.2004**
(21) Anmeldenummer: 01104671.1
(22) Anmeldetag: 24.02.2001
(51) Int. Cl.: C08J 3/03

(54) **Verfahren zur Herstellung von Polyorganosiloxanemulsionen**
Process for preparing polyorganosiloxane emulsions
Procédé pour préparer des émulsions de polyorganosiloxanes

(30) Priorität: 09.03.2000 DE 10011564
(43) Veröffentlichungstag der Anmeldung: 12.09.2001
(73) Patentinhaber: Goldschmidt AG, 45127 Essen (DE)
(72) Erfinder: Silber, Stefan, Dr., 47804 Krefeld (DE); Sucker, Roland, 59368 Werne (DE)

(56) Entgegenhaltungen:
- GB-A- 903 565
- US-A- 2 829 112
- US-A- 4 405 490
- US-A- 4 908 154
- US-A- 5 500 161
- US-A- 5 817 714

## Beschreibung

Die Erfindung betrifft ein Verfahren zur Herstellung von Polyorganosiloxanemulsionen, deren innere Phase den Polyorganosiloxanwirkstoff und deren äußere Phase einen Emulgator oder ein Emulgatorgemisch und gegebenenfalls ein emulsionsstabilisierendes Schutzkolloid gelöst oder dispergiert enthält, die so erhältliche Polysiloxanemulsion sowie insbesondere die Verwendung dieser derart hergestellten Makroemulsionen als Entschäumer.

Bekannte Entschäumeremulsionen sind dem Stand der Technik entsprechend (DE 28 29 906 A, DE 42 37 754 A) Makroemulsionen, deren dispergierte Phase Teilchen mit mittleren Teilchengrößen bis 100 µm aufweist. Dabei besteht die innere Phase aus dem Entschäumerwirkstoff oder enthält ihn in einem Trägermedium wie zum Beispiel einem Lösemittel.

Die Verwendung von Polyorganosiloxanen, zum Beispiel in Form von Siliconölen oder Polyethersiloxancopolymeren als Entschäumeröle ist bekannt (US 3,763,021 A, US 5,804,099 A). Dabei können in den Ölen feinteilige Feststoffe enthalten sein, welche die entschäumende Wirkung noch verstärken. Beispiel eines solchen geeigneten feinteiligen Feststoffes ist hochdisperse, meist pyrolytisch gewonnene Kieselsäure, die durch Behandlung mit Organosiliciumverbindungen hydrophobiert sein kann (R.E.Patterson, Coll. And Surfaces A, 74, 115 (1993)).

Die Verwendung dieser Polyorganosiloxane ist insbesondere in Form ihrer o/w-Emulisonen bevorzugt, weil in Abhängigkeit von der gewählten Rühr- und Homogenisiermechanik eine Teilchengrößenvoreinstellung der Entschäumeröltröpfchen möglich ist. Diese Verteilung kann bei nur geringem Scherkrafteintrag in das zu entschäumende System übertragen werden. Die jeweilige Teilchengrößenverteilung ist entscheidend für die Charakteristik des Entschäumers in dem zu entschäumenden System. Auch im Hinblick auf die Dosierbarkeit ist die Verwendung von o/w-Emulsionen gegenüber den reinen Wirkstoffen deutlich bevorzugt.

Allerdings sind zur Herstellung solcher o/w-Emulsionen vielfach aufwendige Mehrstufenverfahren notwendig, insbesondere sind resultierende Produktqualitäten dieser Makroemulsionen häufig zudem unzureichend.

Derartige Polyorganosiloxanemulsionen neigen beispielsweise infolge ihrer relativ großen Teilchen in der dispersen Phase zu Sedimentation und Koaleszenz. Insbesondere sind daher auch die Eigenschaftsprofile (Wirksamkeit, Neigung zu Oberflächendefekten) solcher Entschäumeremulsionen schwankend und mit der Zeit veränderlich, was immer wieder zu Anwendungsproblemen führt. Zwar lässt sich mit Hilfe von Schutzkolloiden durch Viskositätssteigerung diesem Effekt entgegenwirken. Trotzdem sind in vielen Fällen erreichbare Wärme- und Schüttelstabilitäten unzureichend. Auch hat es nicht an Versuchen gefehlt durch höhere Emulgatorgehalte diese Eigenschaften zu verbessern. Nur ist es dem Fachmann geläufig, dass mit zunehmendem Emulgatorgehalt die Wirksamkeit von Entschäumern über die Zeit drastisch abnimmt.

Ein Dispergierprozess basierend auf der Serienschaltung von Produktgemischen ist bislang zur Herstellung von Tintenstrahldruckerfarben (US 5,168,022 A, US 5,026,427 A) oder Magnetpulverdispersionen (US 5,927,852 A) beschrieben.

Ein ähnliches Prinzip ist zur Herstellung von Mikroemulsionen (alle Tröpfchen < 1 µm) bekannt (US 4,908,154 A). Allerdings wird in diesem Falle der Produktstrom in zwei Teile geteilt, ändert seine Richtung, kollidiert mit sich selbst im Gegenstromverfahren und fließt anschließend wieder in einem Strom zusammen.

Die Herstellung von Polyorganosiloxanemulsionen mittels dieses Verfahrens ist unbekannt.

Der vorliegenden Erfindung liegt daher die Aufgabe zugrunde, Polyorganosiloxanemulsionen herzustellen, welche koaleszenzund sedimentationsstabiler bei Wärme- und Schüttelbelastung sind, emulgatorärmer sind, gute entschäumende Eigenschaften besitzen, und diese Performance über längere Zeit beibehalten.

Diese der Erfindung zugrundeliegende Aufgabe wird überraschenderweise dadurch gelöst, dass folgendes Verfahren zur Herstellung der Polyorganosiloxanemulsionen eingesetzt wird:
a) Formulierung eines Gemisches aus:
   5 bis 50 Gew.-% gegebenenfalls hydrophobe Festkörper enthaltenden Polyorganosiloxanen,
   0 bis 20 Gew.-% organischem Öl,
   0,5 bis 10 Gew.-% eines oder mehrerer nichtionischer oder anionischer Emulgatoren,
   40 bis 95 Gew.-% Wasser sowie gegebenenfalls Verdicker, Schutzkolloide und/oder Konservierungshilfsmittel,
b) Durchleiten dieses Gemisches und Dispergierung in wenigstens einer Interaktionskammer mit einer Kapillardicke von 100 bis 500 µm in einem Druckbereich von 100 bis 1000 bar und
c) Entspannung dieses Gemisches in einem Auslaß-Reservoir,
wobei die mittleren Tröpfchengrößen 0,5 bis 100 µm betragen.

Überraschenderweise sind die Emulsionsstabilitäten erfindungsgemäß hergestellter O/W-Polyorganosiloxanemulsionen im Vergleich zu nach herkömmlichen Methoden (Hochdruckhomogenisator, Rotor-Stator-Systeme, Kolloidmühle u.a.) hergestellten Emulsionen signifikant verbessert respektive lassen sich Emulsionen mit deutlich geringerem Emulgatorbedarf und demzufolge verbessertem Eigenschaftsprofil herstellen. Dabei wird die Formulierung aus Polyorganosiloxan, Emulgator(en), Wasser und gegebenenfalls weiteren Zusätzen unter einem Druck von 100 bis 1000 bar, vorzugsweise 100 bis 600 bar, insbesondere bevorzugt 150 bis 450 bar durch ein oder mehrere Mikrokanäle mit Kapillardicken von 100 bis 500 µm, idealerweise von 200 bis 400 µm, geleitet. Dabei sind diese kapillaren Mikrokanäle vorzugsweise dadurch gekennzeichnet, dass sie an wenigstens einer Stelle geknickt sind, so dass der Produktstrom in seiner Richtung umgelenkt wird. Nach Entspannung und Auffangen der Polyorganosiloxanemulsion erhält man ein Produkt, das durch mittlere Tröpfchengrößen von 0,5 bis 100 µm charakterisiert ist.

Die vorteilhafte Eignung des erfindungsgemäßen Verfahrens zur Herstellung dieser makrodispersen Polyorganosiloxanemulsionen ist daher überaus überraschend.

Derartige Polyorganosiloxanemulsionen können nicht nur als Entschäumer Verwendung finden, sondern eignen sich auch als Trennmittel oder Bautenschutzmittel.

Die erfindungsgemäß herzustellenden Entschäumeremulsionen können in an sich bekannter Weise unter anderem zur Entschäumung von Tensidlösungen, Tensidkonzentraten, Latices, Reinacrylatdispersionen (beispielsweise für Papierbeschichtungen, Klebstoffe, Dispersionsfarben), Lacken und wässrigen Druckfarben verwendet werden.

Als Emulgatoren enthalten die gemäß dem erfindungsgemäßen Verfahren hergestellten und erfindungsgemäß einzusetzenden Polyorganosiloxanemulsionen ein oder mehrere nichtionische oder anionische Emulgatoren. Beispiele nichtionischer Emulgatoren sind die Fettsäureester mehrwertiger Alkohole, deren Polyalkylenglycolderivate, die Polyglycolderivate von Fettsäuren und Fettalkoholen, Alkylphenolethoxylate sowie Blockcopolymere aus Ethylenoxid und Propylenoxid, ethoxylierte Amine, Aminoxide, Acetylendioltenside und Silicontenside. Vorzugsweise werden Ethoxylierungsderivate fettchemischer Rohstoffe verwendet. Besonders bevorzugt sind nichtionische Oleyl- und Stearylderivate.

Beispiele anionischer Emulgatoren sind Dialkylsulfosuccinate (Emcol® 4500), Alkylethersulfate und -phosphate, Alkylsulfate (Witcolate® D5-10) und alpha-Olefinsulfonate (Witconate® AOS). Auch spezielle blockcopolymere Emulgatoren, wie sie in der DE 198 36 253 A beschrieben sind, seien erwähnt.

Beispielhafte Schutzkolloide und Verdicker sind Cellulosederivate wie Methylcellulose, Carboxymethylcellulose, Hydroxyethylcellulose, Hydroxypropylcellulose, ferner synthetische Polymere wie Polyvinylalkohol, Polyacrylate und Maleinsäureanhydridcopolymere (US 4,499,233 A, US 5,023,309 A) oder insbesondere lineare und verzweigte Polyurethane (US 4,079,028 A, US 4,155,892 A), Polyharnstoffe, Polyetherpolyole (US 4,288,639 A, US 4,354,956 A, US 4,904,466 A) sowie biosynthetische Polymere wie zum Beispiel Xanthan Gum.

Beispiele anorganischer Feststoffe sind gegebenenfalls hydrophobierte Kieselsäure, Aluminiumoxid, Erdalkalicarbonate oder ähnliche aus dem Stand der Technik bekannte und übliche feinteilige Feststoffe. Als organische feinteilige Substanzen können für diesen Zweck bekannte Erdalkalisalze von langkettigen Fettsäuren mit 12 bis 22 Kohlenstoffatomen, die Amide dieser Fettsäuren sowie Polyharnstoffe verwendet werden.

Erfindungsgemäß herzustellende Polyorganosiloxanemulsionen sind beispielhaft in den Ausführungsbeispielen beschrieben. Dabei entsprechen die stofflichen Formulierungen dem Stand der Technik, wie er beispielsweise in DE 24 43 853 A, DE 38 07 247 A und DE 42 37 754 A beschrieben ist.

### Ausführungsbeispiele:

### Beispiel 1:

Zu 74,55 Teilen 60°C warmem Wasser wurden 5 Teile einer Mischung aus gleichen Teilen ethoxyliertem Triglycerid (Atlas® G1300 der Firma ICI) und ethoxylierter Fettsäure (Brij® 72 der Firma ICI) gegeben. In diese warme Mischung wurden nun 0,25 Teile eines anionischen Polyacrylamides (Praestol® der Firma Stockhausen) eingestreut. Man ließ die Mischung 10 Minuten rühren und gab 20 Teile eines SiO₂ (5 Teile Sipernat® D10 der Firma Degussa)-enthaltenden Organosiloxanes (Tego® Glide B1484 der Firma Tego), welches eine Viskosität von 800 mPas und eine mittlere Molekularmasse von 8500 g/mol aufwies, dazu. Nach weiterem 10-minütigem Rühren wurde die Mischung bei 300 bar durch zwei in Reihe geschaltete Interaktionskammern, wobei die Kapillardicke der ersten Kammer 400 µm und die der zweiten Kammer 200 µm betrug, gepumpt. Am Auslass wurde die Mischung mittels eines Plattenkühlers auf < 30° C gekühlt. Es bildete sich eine Emulsion, welche sowohl unverdünnt als auch verdünnt keine Abscheidungen aufwies.

### Beispiel 2:

Zu 73,29 Teilen 60°C warmem Wasser wurden 5 Teile einer Mischung aus gleichen Teilen ethoxyliertem Triglycerid gemäß Beispiel 1 und ethoxylierter Fettsäure gemäß Beispiel 1 gegeben. In diese warme Mischung wurden nun 0,16 Teile des Polyacrylamides gemäß Beispiel 1 und 1,35 Teile eines linearen, wasserdispergierbaren Polyurethanes (Coatex® BR 910 der Firma Coatex) eingestreut. Man ließ die Mischung 10 Minuten rühren und gab 16,00 Teile des SiO₂-enthaltenden Organosiloxanes gemäß Beispiel 1 und 4,00 Teile eines Polyalkylenglycolethers (Arcol® 2000N der Firma Lyondell) mit einem MG von ca. 2000 g/mol dazu. Nach weiterem 10-minütigem Rühren wurde die Mischung bei 150 bar durch eine Interaktionskammer, deren Kapillardicke 400 µm betrug, gepumpt. Am Auslass wurde die Mischung mittels eines Plattenkühlers auf < 30° C gekühlt. Es bildete sich eine Emulsion, welche sowohl unverdünnt als auch verdünnt keine Abscheidungen aufwies.

### Beispiel 3:

Zu 74,55 Teilen 70°C warmem Wasser wurden 5 Teile einer Mischung aus gleichen Teilen ethoxyliertem Triglycerid gemäß Beispiel 1 und ethoxylierter Fettsäure gemäß Beispiel 1 gegeben. In diese warme Mischung wurden nun 0,25 Teile des Polyacrylamides gemäß Beispiel 1 eingestreut. Man ließ die Mischung 10 Minuten rühren und gab 20 Teile eines SiO₂ (5 Teile Sipernat® D10 der Firma Degussa)-enthaltenden Organosiloxanes (Tego® Antifoam EH 7284-6 der Firma Goldschmidt), welches eine Viskosität von 1600 mPas und eine mittlere Molekularmasse von 12000 g/mol aufwies, dazu. Nach weiterem 10-minütigem Rühren wurde die Mischung bei 250 bar durch zwei in Reihe geschaltete Interaktionskammern, wobei die Kapillardicke der ersten Kammer 400 µm und die der zweiten Kammer 200 µm betrug, gepumpt. Am Auslass wurde die Mischung mittels eines Plattenkühlers auf < 30° C gekühlt. Es bildete sich eine Emulsion, welche sowohl unverdünnt als auch verdünnt keine Abscheidungen aufwies.

### Beispiel 4:

Zu 74,55 Teilen 70°C warmem Wasser wurden 3 Teile einer Mischung aus gleichen Teilen ethoxyliertem Triglycerid gemäß Beispiel 1 und ethoxylierter Fettsäure gemäß Beispiel 1 gegeben. In diese warme Mischung wurden nun 0,25 Teile des Polyacrylamides gemäß Beispiel 1 eingestreut. Man ließ die Mischung 10 Minuten rühren und gab 20 Teile eines SiO₂-enthaltenden Organosiloxanes gemäß Beispiel 3 dazu. Nach weiterem 10-minütigem Rühren wurde die Mischung bei 150 bar durch zwei in Reihe geschaltete Interaktionskammern, wobei die Kapillardicke der ersten Kammer 400 µm und die der zweiten Kammer 200 µm betrug, gepumpt. Am Auslass wurde die Mischung mittels eines Plattenkühlers auf < 30° C gekühlt. Es bildete sich eine Emulsion, welche sowohl unverdünnt als auch verdünnt keine Abscheidungen aufwies.

### Vergleichsbeispiel 1:

Zu 10,00 Teilen 60°C warmem Wasser wurden 5,00 Teile einer Mischung aus gleichen Teilen ethoxyliertem Triglycerid gemäß Beispiel 1 und ethoxylierter Fettsäure gemäß Beispiel 1 gegeben und 10 Minuten mit einer Turbine bei einer Umfangsgeschwindigkeit von 6 m/s gerührt. In diese warme Mischung gab man 20 Teile des SiO₂-enthaltenden Organosiloxanes gemäß Beispiel 1 innerhalb von 5 Minuten dazu. Nach weiterem 10-minütigem Rühren bei 6 m/s wurden, unter Kühlung, 50,00 Teile der 0,5%igen Polyacrylamidlösung gemäß Beispiel 1 zugegeben. Danach erfolgte die Zugabe von 10,00 Teilen Wasser. Das Ganze wurde bis zum Erreichen einer Temperatur von < 30° C, mindestens jedoch 10 Minuten, gerührt. Danach wurde die Mischung bei 50 bar durch einen Spalthomogenisator gepumpt. Es bildete sich eine Emulsion, welche sowohl unverdünnt als auch verdünnt keine Abscheidungen aufwies.

### Vergleichsbeispiel 2:

Zu 10,00 Teilen 60°C warmem Wasser wurden 5,00 Teile einer Mischung aus gleichen Teilen ethoxyliertem Triglycerid gemäß Beispiel 1 und ethoxylierter Fettsäure gemäß Beispiel 1 gegeben und 10 Minuten mit einer Turbine bei einer Umfangsgeschwindigkeit von 6 m/s gerührt. In diese warme Mischung gab man 16,00 Teile des SiO₂-enthaltenden Organosiloxanes gemäß Beispiel 1 und 4,00 Teile des Polyalkylenglycolethers gemäß Beispiel 2 dazu. Nach weiterem 10-minütigem Rühren bei 6 m/s wurden, unter Kühlung, 32,00 Teile der 0,5%igen Polyacrylamidlösung gemäß Beispiel 1 und 30,00 Teile einer 4,5%igen Mischung eines linearen, wasserdipergierbaren Polyurethanes gemäß Beispiel 2 zugegeben. Das Ganze wurde bis zum Erreichen einer Temperatur von < 30° C, mindestens jedoch 10 Minuten, gerührt. Danach wurde die Mischung bei 50 bar durch einen Spalthomogenisator gepumpt. Es bildete sich eine Emulsion, welche sowohl unverdünnt als auch verdünnt keine Abscheidungen aufwies.

### Vergleichsbeispiel 3:

Zu 10,00 Teilen 60°C warmem Wasser wurden 5,00 Teile einer Mischung aus gleichen Teilen ethoxyliertem Triglycerid gemäß Beispiel 1 und ethoxylierter Fettsäure gemäß Beispiel 1 gegeben und 10 Minuten mit einer Turbine bei einer Umfangsgeschwindigkeit von 6 m/s gerührt. In diese warme Mischung gab man 20 Teile des SiO₂-enthaltenden Organosiloxanes gemäß Beispiel 3 innerhalb von 5 Minuten dazu. Nach weiterem 10-minütigem Rühren bei 6 m/s wurden, unter Kühlung, 50,00 Teile der 0,5%igen Polyacrylamidlösung gemäß Beispiel 1 zugegeben. Danach erfolgte die Zugabe von 10,00 Teile Wasser. Das Ganze wurde bis zum Erreichen einer Temperatur von < 30° C, mindestens jedoch 10 Minuten, gerührt. Danach wurde die Mischung bei 50 bar durch einen Spalthomogenisator gepumpt. Es bildete sich eine Emulsion, welche sowohl unverdünnt als auch verdünnt keine Abscheidungen aufwies.

### Vergleichsbeispiel 4:

Zu 10,00 Teilen 60°C warmem Wasser wurden 3,00 Teile einer Mischung aus gleichen Teilen ethoxyliertem Triglycerid gemäß Beispiel 1 und ethoxylierter Fettsäure gemäß Beispiel 1 gegeben und 10 Minuten mit einer Turbine bei einer Umfangsgeschwindigkeit von 6 m/s gerührt. In diese warme Mischung gab man 20 Teile des SiO₂-enthaltenden Organosiloxanes gemäß Beispiel 2 innerhalb von 5 Minuten dazu. Nach weiterem 10-minütigem Rühren bei 6 m/s wurden, unter Kühlung, 50,00 Teile der 0,5%igen Polyacrylamidlösung gemäß Beispiel 1 zugegeben. Danach erfolgte die Zugabe von 10,00 Teile Wasser. Das Ganze wurde bis zum Erreichen einer Temperatur von < 30° C, mindestens jedoch 10 Minuten, gerührt. Danach wurde die Mischung bei 50 bar durch einen Spalthomogenisator gepumpt. Es bildete sich eine Emulsion, welche unverdünnt leichte und im verdünnten Zustand starke Wirkstoffabscheidungen aufwies.

Die Teilchenverteilungen der Beispiele 1 bis 4 und Vergleichsbeispiele 1 bis 4 wurden mittels eines Coulter LS 230 vermessen.

| | Mittlere Teilchengröße [ µm ] | Teilchengröße nbereich [ µm ] | Verteilungsform |
|---|---|---|---|
| Beispiel 1 | 2,7 | 0,2 bis 10 | Monomodal |
| Beispiel 2 | 1,4 | 0,3 bis 10 | Monomodal |
| Beispiel 3 | 0,8 | 0,2 bis 3 | Monomodal |
| Beispiel 4 | 0,8 | 0,2 bis 3 | Monomodal |
| Vgl. 1 | 2,6 | 0,1 bis 40 | Bimodal |
| Vgl. 2 | 1,6 | 0,1 bis 35 | Bimodal |
| Vgl. 3 | 1 | 0,1 bis 20 | Monomodal |

Infolge der Produktinstabilität war eine Teilchengrößenbestimmung der Vergleichsemulsion 4 nicht möglich.

Die erfindungsgemäß herzustellenden Entschäumeremulsionen wiesen insbesondere die folgenden verbesserten anwendungstechnischen Eigenschaften auf:

### Höhere Verdünnungsstabilität

In ein 250 ml Becherglas wurden 5 g Entschäumeremulsion auf einer Waage eingewogen.

Die Emulsion wurde nun unter Zugabe von 45 ml entionisiertem Wasser zügig durch Schwenken des Becherglases bis zur vollständigen Verteilung dispergiert.

Die Beurteilung erfolgte sofort nach der Verdünnung nach folgender Benotung:

| Note: | Oberflächenbeurteilung der Dispersion: |
|---|---|
| 1 | keine Abscheidungen |
| 2 | sehr dünner Ölfilm (Newtonringe) |
| 3 | dünner Ölfilm |
| 4 | kleine Öltropfen und dünner Ölfilm |
| 5 | Öltropfen und Abscheidung |
| 6. | große Öltropfen und starke Abscheidung |

| Produkt | Note der Verdünnung |
|---|---|
| Beispiel 1 | 1 |
| Beispiel 2 | 1 |
| Beispiel 3 | 1 |
| Beispiel 4 | 1 |
| Vgl. 1 | 2 |
| Vgl. 2 | 2 |
| Vgl. 3 | 3 |
| Vgl. 4 | 6 |

### Höhere Stabilität gegen äußere Scher- sowie Stoß- und Pralleinwirkungen

Eine 100ml-Pulverflasche wurde zu 80% mit der zu untersuchenden Emulsion gefüllt, verschraubt und auf einer Schüttelmaschine bei einer Auslenkung von 30 mm und einer Frequenz von 300 min⁻¹ geschüttelt. Die Emulsionen wurden stündlich visuell auf ihre Stabilität überprüft. Nach max. 8 h wurde der Test abgebrochen.

| Produkt | Zeit, nach welcher eine Verschlechterung der Probe zu beobachten ist | Verdünnung nach dem Schütteln Note |
|---|---|---|
| Beispiel 1 | > 8 Stunden | 1 |
| Beispiel 2 | > 8 Stunden | 2 |
| Beispiel 3 | > 8 Stunden | 2 |
| Beispiel 4 | > 8 Stunden | 2 |
| Vgl. 1 | 1 Stunde | 6 |
| Vgl. 2 | 4 Stunden | 5 |
| Vgl. 3 | 3 Stunden | 6 |
| Vgl. 4 | ------ | ------- |

### Höhere Wärme-/Kältestabilität

Die in Beispielen 1 bis 4 und Vergleichsbeispielen 1 bis 3 hergestellten Emulsionen wurden hinsichtlich der Gefrierstabilität überprüft, indem die Emulsionen bei -15° C eingefroren und dann auf Raumtemperatur aufgetaut wurden. Dieses Einfrieren wurde 3 mal nacheinander durchgeführt. Die Emulsionen wurden anschließend mit entionisiertem Wasser verdünnt und dann benotet.

Bei der Bestimmung der Wärmestabilität erfolgte eine 2-wöchige Lagerung der Emulsionen bei 50° C. Nach dem Abkühlen wurden die Proben mit entionisiertem Wasser verdünnt und dann beurteilt.

| | Verdünnung nach 3 Gefrier-Tau-Cyclen Note | Verdünnung nach Wärmelagerung Note |
|---|---|---|
| Beispiel 1 | 2 | 1 |
| Beispiel 2 | 2 | 2 |
| Beispiel 3 | 2 | 2 |
| Beispiel 4 | 2 | 1 |
| Vgl. 1 | 4 | 4 |
| Vgl. 2 | 6 | 4 |
| Vgl. 3 | 5 | 5 |

### Geringerer Emulgatorbedarf

Allein der Stabilitätsvergleich der Emulsion 4 und der Vergleichsemulsion 4 verdeutlichte, dass nach erfindungsgemäßem Verfahren die Herstellung dieser Emulsion sogar mit geringerem Emulgatorbedarf bei deutlichst verbessertem Stabilitätsverhalten möglich wurde.

### Höhere Stabilität und Wirkung in Tensidkonzentraten

Zur Überprüfung der Stabilität in Tensidkonzentraten wurde das Tensidkonzentrat Marlosol® 013/50 (Hüls AG) mit 1 % Entschäumeremulsion versetzt. Diese Mischung wurde dann mit entionisiertem Wasser auf 1 % verdünnt und in einem Begasungstest überprüft. Im Begasungstest wurde 1 Liter Verdünnung in einem graduierten 2 Liter-Messzylinder, mittels einer Fritte der Porosität D 1, mit 6 Liter Luft/Minute begast. Es wurde die Zeit gemessen bis sich 1 Liter Schaum gebildet hat. Um den Wirkungsabfall, welcher durch Lagerung der Tensid/Entschäumermischung auftrat, festzustellen wurde der Test nach 4-wöchiger Lagerung wiederholt.

| | Begasungstest der ungelagerten Probe | Begasungstest nach 4 Wochen Lagerung |
|---|---|---|
| | Zeit bis 1 Liter Schaum [ s ] | Zeit bis 1 Liter Schaum [ s ] |
| Kein Zusatz | 12 | 12 |
| Beispiel 1 | 1970 | 1820 |
| Beispiel 2 | 2740 | 2480 |
| Beispiel 3 | 1750 | 1760 |
| Beispiel 4 | 1790 | 1690 |
| Vgl. 1 | 1610 | 65 |
| Vgl. 2 | 2160 | 670 |
| Vgl. 3 | 1440 | 185 |

### Geringere Störanfälligkeit in wässrigen Überdrucklacken

Zur Überprüfung der anwendungstechnischen Eigenschaften wurde nach folgender Rezeptur ein Drucklack formuliert, wobei sich die Mengenangaben auf Gew.-% bezogen.

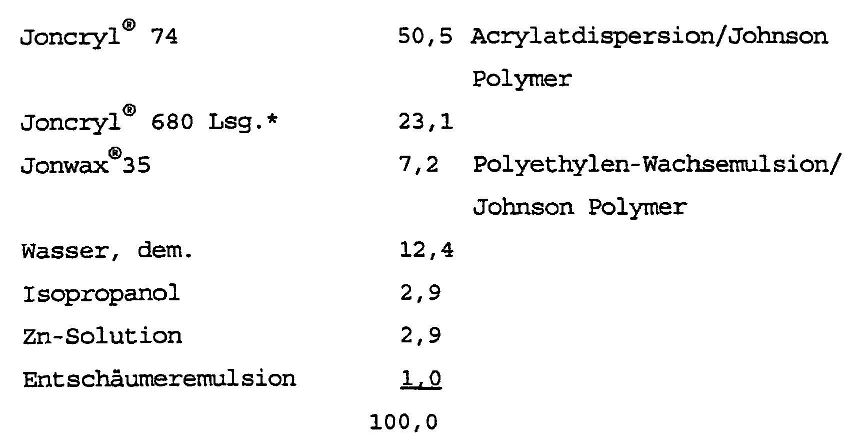

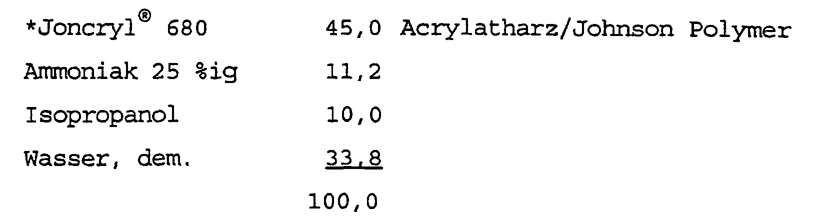

Als letzter Rezepturbestandteil wurde die Entschäumeremulsion hinzugegeben, wobei die Einarbeitung mittels einer Perlmillscheibe 3 Min. bei 1500 U/Min. erfolgte.

### Schaumtest

50 g des wässrigen Drucklackes wurden in ein 150 ml-Becherglas eingewogen und 1 Min. bei 2500 U/Min. mit einer Dissolverscheibe (3 cm Durchmesser) geschert. Anschließend wurden 45 g in einen Standzylinder eingewogen und die Schaumhöhe in ml angegeben.

### Benetzungsverhalten

Der wässrige Drucklack wurde mittels eines Spiralrakels (12 µm) nass auf transparenter PVC-Folie aufgerakelt. Der so applizierte, getrocknete Film wurde visuell auf Benetzungsstörungen hin untersucht. Die Beurteilung erfolgte nach einer Skala von 1 bis 4, wobei 1 einen störungsfreien Film beschrieb, 4 von starken Benetzungsstörungen zeugte.

### Ergebnisse

| | | |
|---|---|---|
| Beispiel 1 | 48 ml/45 g | Note 1 |
| Vergleichsbeispiel 5 | 50 ml/45 g | Note 3 |

### Bessere (Langzeit-)Entschäumung in Reinacrylat- und Acrylatcopolymerdispersionen und Beschichtunqssystemen auf Basis dieser Dispersionen

Zur Überprüfung weiterer anwendungstechnischer Eigenschaften wurde die folgende Dispersionsfarbenrezeptur ausgewählt (Mengenangaben in Gew.-%):

### Dispersionsfarbe:

| | | |
|---|---|---|
| Wasser | 36,2 | |
| Coatex® P50 | 0,4 | Coatex, Dispergiermittel |
| Dispers 715 W | 0,1 | Tego, Dispergiermittel |
| Mergal® K7 | 0,2 | Konservierungsmittel |
| Coatex® BR100 | 2,3 | Coatex, PU-Verdicker |
| Calcidar® extra | 22,1 | Omya, Füllstoff |
| Titandioxid | 17,5 | |
| Finntalk® M15 | 4,7 | |
| NaOH, 10 %-ig | 0,1 | |
| Acronal® 290D | 16,2 | BASF, Styrolacrylatdispersion |
| Entschäumer | 0,2 | |

Alle Rezepturbestandteile wurden in Lieferform eingesetzt. Als letzter Rezepturbestandteil wurde jeweils die entsprechende Entschäumeremulsion hinzugegeben. Dabei erfolgte die Einarbeitung eine Minute bei 1000 U/Min.

Die Wirksamkeit wurde anhand des nachfolgend beschriebenen Rollentestes überprüft.

### Rollentest

Der sogenannte Rollentest kam den praktischen Bedingungen relativ nahe, so dass eine gute Differenzierung zwischen den unterschiedlichen Entschäumerzubereitungen auch im Hinblick auf einzusetzende Konzentrationen möglich war.

Beim Rollentest wurden mittels einer offenporigen Schaumrolle 40 g der zu untersuchenden Dispersionsfarbe auf einer nicht saugenden Prüfkarte mit einer Gesamtfläche von 500 cm² verteilt. Die Schaumstoffrolle wurde vor der Farbapplikation mit Wasser benetzt. Es wurde dabei sichergestellt, dass immer die gleiche zusätzliche Wassermenge in die vorgelegte Farbe eingebracht wurde und damit die Trocknungszeit des Lackes stets gleich blieb. Die Nassfilmauflage betrug ca. 300 g/m² Fläche. Nach 24-stündigem Trocknen des Films wurden die Prüftafeln hinsichtlich des vorhandenen Makroschaums (Zahl der Blasen auf 100 cm²), hinsichtlich des vorhandenen Mikroschaums (Zahl der Nadelstiche durch Vergleich mit Prüftafeln mit verschieden stark ausgeprägten Störungsbildern, Skala von 1 (sehr gut) bis 5 (mangelhaft, viele Nadelstiche) sowie hinsichtlich etwaiger Benetzungsdefekte bewertet.

Diese Tests wurden wiederholt mit der additivierten Dispersionsfarbe, die 6 Wochen bei 50°C gelagert worden war.

### Ergebnisse des Rollentestes in Dispersionsfarbe

| Zubereitung | Konzentration | Makroschaum | | Mikroschaum | | Benetzungsfehler | |
|---|---|---|---|---|---|---|---|
| | | 0W | 6W | 0W | 6W | 0W | 6W |
| Nullprobe | 0 | 50 | 50 | 4 | 4 | keine | keine |
| Beisp.1 | 0,2 | 0 | 0 | 1 | 1 | keine | keine |
| Beisp.1 | 0,1 | 0 | 1 | 1 | 1 | keine | keine |
| Beisp.1 | 0,06 | 0 | 2 | 1 | 1 | keine | keine |
| Vgl. 1 | 0,2 | 0 | 3 | 1 | 2 | keine | keine |
| Vgl. 1 | 0,1 | 1 | 36 | 1 | 2 | keine | gering |
| Beisp.2 | 0,1 | 0 | 0 | 1 | 1 | keine | keine |
| Vgl. 2 | 0,1 | 1 | 40 | 1 | 3 | keine | stark |

Es wurde die Überlegenheit der nach erfindungsgemäßem Verfahren hergestellten Entschäumer in Hinblick auf ihre Effizienz als auch insbesondere im Hinblick auf ihre Langzeitwirksamkeit evident.

Wie aus den vorhergehenden anwendungstechnischen Beispielen ersichtlich ist, zeichnen sich die nach erfindungsgemäßem Verfahren hergestellten Entschäumeremulsionen durch verbesserte Produktstabilitäten wie verbesserte Schüttel- und Wärmestabilitäten aus, was in vielen Fällen erstmals deren Transport und nachfolgenden Gebrauch erst ermöglicht. Bedingt durch die grundlegend bessere Stabilisierung dieser Makroemulsionen ergibt sich auch in allen Fällen eine verbesserte Verdünnungsstabilität. Auch lassen sich vereinzelte Emulsionen mit geringerem Emulgatorbedarf herstellen, was den Gebrauch dieser meistenteils ökotoxikologisch bedenklichen Tenside zumindest einschränkt. Insbesondere ergeben sich jedoch in anwendungsrelevanten Prüfsystemen durchgehend deutlich verbesserte Eigenschaften.

## Patentansprüche

1. Verfahren zur Herstellung von Polyorganosiloxanemulsionen, **gekennzeichnet durch**
a) Formulierung eines Gemisches aus:
5 bis 50 Gew.-% gegebenenfalls hydrophobe Festkörper enthaltenden Polyorganosiloxanen,
0 bis 20 Gew.-% organischem Öl,
0,5 bis 10 Gew.-% eines oder mehrerer nichtionischer oder anionischer Emulgatoren,
40 bis 95 Gew.-% Wasser sowie gegebenenfalls Verdicker, Schutzkolloide und/oder Konservierungshilfsmittel,
b) Durchleiten dieses Gemisches und Dispergierung in wenigstens einer Interaktionskammer mit einer Kapillardicke von 100 bis 500 µm in einem Druckbereich von 100 bis 1000 bar und
c) Entspannung dieses Gemisches in einem Auslass-Reservoir,
wobei die mittleren Tröpfchengrößen 0,5 bis 100 µm betragen.

2. Verfahren nach Anspruch 1, **dadurch gekennzeichnet, dass** man zwei in Reihe geschaltete Interaktionskammern zur Dispergierung einsetzt.

3. Verfahren nach Anspruch 1 oder 2, **dadurch gekennzeichnet, dass** man in einem Druckbereich von 100 bis 600 bar, insbesondere 150 bis 450 bar arbeitet.

4. Verfahren nach einem der Ansprüche 1 bis 3, **dadurch gekennzeichnet, dass** man die mittleren Tröpfchengrößen von 1 bis 20 µm einstellt.

5. Verfahren nach einem der Ansprüche 1 bis 4, **dadurch gekennzeichnet, dass** man Mikrokanäle mit einer Kapillardicke von 200 bis 400 µm einsetzt.

6. Verfahren nach einem der Ansprüche 1 bis 5, **dadurch gekennzeichnet, dass** man Mikrokanäle mit einem Umlenkknick einsetzt.

7. Polyorganosiloxanemulsionen erhältlich nach einem Verfahren gemäß einem der Ansprüche 1 bis 6.

8. Polyorganosiloxanemulsionen nach Anspruch 7, **dadurch gekennzeichnet, dass** Polyorganosiloxane Polyethersiloxancopolymere umfassen.

9. Verwendung von Polyorganosiloxanemulsionen nach Anspruch 7 als Entschäumer, Trennmittel oder Bautenschutzmittel.

10. Verwendung nach Anspruch 9 als Entschäumer, **dadurch gekennzeichnet, dass** man als Emulgatoren polymere Emulgatoren mit einer mittleren Molekularmasse größer 1000 Dalton einsetzt.

## Claims

1. Process for preparing polyorganosiloxane emulsions, **characterized by**
a) formulating a mixture from:
from 5 to 50% by weight of polyorganosiloxanes optionally comprising hydrophobic solid bodies,
from 0 to 20% by weight of organic oil,
from 0.5 to 10% by weight of one or more nonionic or anionic emulsifiers,
from 40 to 95% by weight of water, and
if desired, thickeners, protective colloids and/or auxiliary preservatives;
b) passing this mixture through, and dispersing it in, at least one interaction chamber having a capillary thickness of from 100 to 500 µm in a pressure range from 100 to 1000 bar; and
c) releasing this mixture in an outlet reservoir,
the average droplet sizes being from 0.5 to 100 µm.

2. Process according to Claim 1, **characterized in that** dispersion is carried out using two interaction chambers connected in series.

3. Process according to Claim 1 or 2, **characterized in that** it is conducted in a pressure range from 100 to 600 bar, in particular from 150 to 450 bar.

4. Process according to one of Claims 1 to 3, **characterized in that** average particle sizes of from 1 to 20 µm are set.

5. Process according to one of Claims 1 to 4, **characterized in that** microchannels having a capillary thickness of from 200 to 400 µm are used.

6. Process according to one of Claims 1 to 5, **characterized in that** microchannels having a deflection angle are used.

7. Polyorganosiloxane emulsions obtainable by a process according to one of Claims 1 to 6.

8. Polyorganosiloxane emulsions according to Claim 7, **characterized in that** polyorganosiloxanes comprise polyethersiloxane copolymers.

9. Use of polyorganosiloxane emulsions according to Claim 7 as defoamers, release agents or architectural preservatives.

10. Use according to Claim 9 as a defoamer, **characterized in that** emulsifiers used comprise polymeric emulsifiers having an average molecular mass of more than 1000 daltons.

## Revendications

1. Procédé pour la préparation d'émulsions de polyorganosiloxane, **caractérisé par**
a) la formulation d'un mélange constitué par :
5 à 50% en poids de polyorganosiloxanes contenant le cas échéant des corps solides hydrophobes,
0 à 20% en poids d'huile organique
0,5 à 10% en poids d'un ou de plusieurs émulsifiants non ioniques ou anioniques
40 à 95% en poids d'eau ainsi que le cas échéant des épaississants, des colloïdes de protection et/ou des conservateurs,
b) le passage de ce mélange et sa dispersion dans au moins une chambre d'interaction présentant une épaisseur de capillaire de 100 à 500 µm dans une plage de pression de 100 à 1000 bars et
c) la détente de ce mélange dans un réservoir de sortie,
les tailles moyennes des gouttelettes étant de 0,5 à 100 µm.

2. Procédé selon la revendication 1, **caractérisé en ce qu'**on utilise deux chambres d'interaction disposées en série pour la dispersion.

3. Procédé selon la revendication 1 ou 2, **caractérisé en ce qu'**on travaille dans une plage de pression de 100 à 600 bars, en particulier de 150 à 450 bars.

4. Procédé selon l'une quelconque des revendications 1 à 3, **caractérisé en ce qu'**on règle les grosseurs moyennes des gouttes de 1 à 20 µm.

5. Procédé selon l'une quelconque des revendications 1 à 4, **caractérisé en ce qu'**on utilise des microcanaux présentant une épaisseur de capillaire de 200 à 400 µm.

6. Procédé selon l'une quelconque des revendications 1 à 5, **caractérisé en ce qu'**on utilise des microcanaux avec un coude de déviation.

7. Emulsions de polyorganosiloxane pouvant être obtenues selon un procédé selon l'une quelconque des revendications 1 à 6.

8. Emulsions de polyorganosiloxane selon la revendication 7, **caractérisées en ce que** les polyorganosiloxanes comprennent des copolymères de polyéthersiloxane.

9. Utilisation d'émulsions de polyorganosiloxane selon la revendication 7 comme anti-mousse, agent de séparation ou agent de protection de constructions.

10. Utilisation selon la revendication 9 comme anti-mousse, **caractérisée en ce qu'**on utilise comme émulsifiants des émulsifiants polymères présentant un poids moléculaire moyen supérieur à 1000 Daltons.
